# EUROPEAN PATENT APPLICATION

(11) **EP 4 647 234 A1**
(43) Date of publication of application: **12.11.2025**
(21) Application number: 25174428.0
(22) Date of filing: 06.05.2025
(51) Int. Cl.: B29C 45/33, B29C 45/37, B29C 45/44

(54) **INJECTION MOLDING METHOD AND DEFORMABLE MOLDING UNIT**

(30) Priority: 08.05.2024 TW 113116975
(71) Applicant: Arcadyan Technology Corporation, Hsinchu City 30071 (TW)
(72) Inventor: WU, Chin-Yi, 302 Zhubei City, Hsinchu County (TW); CHEN, Sheng-Chung, 310 Zhudong Township, Hsinchu County (TW); YAN, Shi-Yu, Suzhou City, 215125 (CN)
(74) Representative: Krauns, Christian

(57) **Abstract**

An injection molding method and a deformable molding unit are provided. The method includes the following steps. First, a mold positioning step is performed to define a mold cavity. The step includes: providing a deformable molding unit on a first axis, the deformable molding unit having a deformable cavity and including a bottom portion and a first elastic portion being elastically deformable with respect to the bottom portion; and applying a first compression force to the first elastic portion by a first drive module along a second axis, reducing the size of the deformable cavity to a reduced dimension. Next, plastic is injected into the mold cavity including the deformable cavity with the reduced dimension to form a workpiece. Then, the first compression force is released, allowing the deformable cavity to return to its original dimension. Afterward, the deformable molding unit is retracted along the first axis.

## Description

### BACKGROUND OF THE INVENTION

### Field of the Invention

The present invention relates to a molding method and a molding unit, and more particularly to an injection molding method and a deformable molding unit.

### Description of the Related Art

Generally, a certain draft angle is required between an injection-molded product and the mold to prevent damage to the product's surface during the demolding process. When the product's appearance requires a textured surface, a larger draft angle is needed to avoid wear on the textured design during demolding. In some cases, however, for certain products, it is not desired to use an excessively large draft angle due to the aesthetic requirement on the appearance, so as to avoid a sidewall with an overly noticeable draft angle. For example, the deeper the product, the larger the required draft angle to prevent scratching of the product's sidewalls; however, this approach results in a sidewall with a noticeable draft angle.

### SUMMARY OF THE INVENTION

The invention is directed to an injection molding method and a deformable molding unit, wherein the deformable molding unit includes an elastically deformable elastic portion. The elastic portion is adapted to be subjected to a compression force during the plastic injection process, thereby reducing the deformable cavity in size so that the injection-molded product will not have a sidewall with a noticeable draft angle. During the demolding step, the compression force is released, allowing the deformable cavity to return to its original dimension and enlarge the draft angle, enabling the injection-molded product to be smoothly demolded without damage.

According to one aspect of the present invention, an injection molding method is provided. The injection molding method includes the following steps. First, a mold positioning step is performed to define a mold cavity. The mold positioning step includes: providing a deformable molding unit on a first axis, the deformable molding unit having a deformable cavity and including a bottom portion and a first elastic portion connected to the bottom portion, the bottom portion and the first elastic portion being connected to the deformable cavity, the first elastic portion being elastically deformable with respect to the bottom portion, and the deformable cavity having an original dimension. The step also includes applying a first compression force to the first elastic portion along a second axis perpendicular to the first axis by a first drive module, such that the first elastic portion deforms with respect to the bottom portion and the deformable cavity is reduced to a reduced dimension. Next, plastic is injected into the mold cavity including the deformable cavity with the reduced dimension to form a workpiece. Subsequently, the first compression force is released by the first drive module, such that the first elastic portion is returned and the deformable cavity is restored to the original dimension. Finally, the deformable molding unit is retracted along the first axis.

According to another aspect of the present invention, a deformable molding unit for injection molding is provided. The deformable molding unit includes a bottom portion and a first elastic portion connected to the bottom portion, the first elastic portion being elastically deformable with respect to the bottom portion. The deformable molding unit has a deformable cavity, the bottom portion and the first elastic portion are connected to the deformable cavity, the deformable molding unit is adapted to be positioned along a first axis during injection molding, and the first elastic portion is adapted to be subjected to a first compression force along a second axis perpendicular to the first axis during injection molding, such that the first elastic portion deforms with respect to the bottom portion, thereby reducing the deformable cavity in size.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 illustrates a three-dimensional view of a deformable molding unit according to one embodiment of the present invention.
FIG. 2A illustrates a top view of the deformable molding unit of FIG. 1.
FIG. 2B is a schematic diagram illustrating a first compression force and a second compression force may be applied to the first elastic portion and the second elastic portion of the deformable molding unit of FIG. 1.
FIG. 3 is a flowchart of an injection molding method according to one embodiment of the present invention.
FIG. 4 is one embodiment of the mold positioning step.
FIG. 5 to FIG. 8 illustrate schematic diagrams of an injection molding system according to one embodiment of the present invention, assisting in illustrating the mold positioning step shown in FIG. 4.
FIG. 9 is one embodiment of the mold opening step.
FIG. 10 to FIG. 13 illustrate schematic diagrams of the injection molding system according to one embodiment of the present invention, assisting in illustrating the mold opening step shown in FIG. 9.
FIG. 14 illustrates a three-dimensional view of a deformable molding unit according to another embodiment of the present invention.
FIG. 15A illustrates a top view of the deformable molding unit of FIG. 14.
FIG. 15B is a schematic diagram illustrating a first compression force and a second compression force may be applied to the first elastic portion and the second elastic portion of the deformable molding unit of FIG. 14.

### DETAILED DESCRIPTION OF THE INVENTION

Various embodiments of the present invention will be described in detail below and illustrated with accompanying drawings. In addition to these detailed descriptions, the present invention may be broadly applied to other embodiments, and any easy substitutions, modifications, or equivalent changes of the described embodiments are included within the scope of the present invention, as defined by the subsequent claims. In the description of the specification, many specific details and examples of embodiments are provided to offer a more complete understanding of the present invention; however, these specific details and examples of embodiments should not be regarded as limitations of the present invention. In addition, well-known steps or elements are not described in detail to avoid placing unnecessary limitations on the present invention. In the drawings, identical or similar reference numerals are used to represent identical or similar elements.

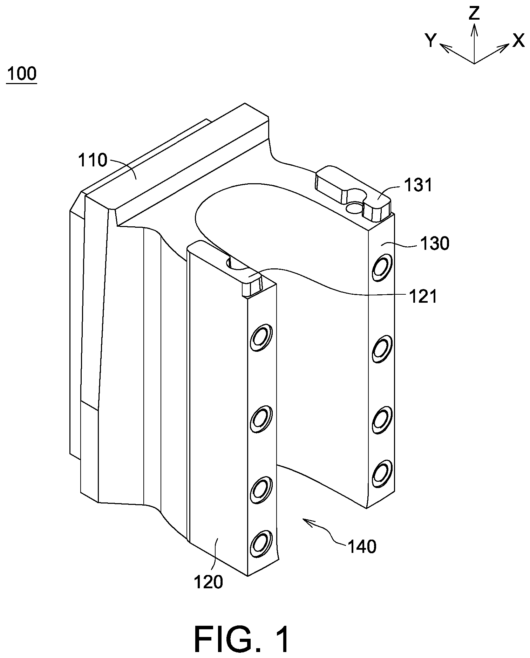

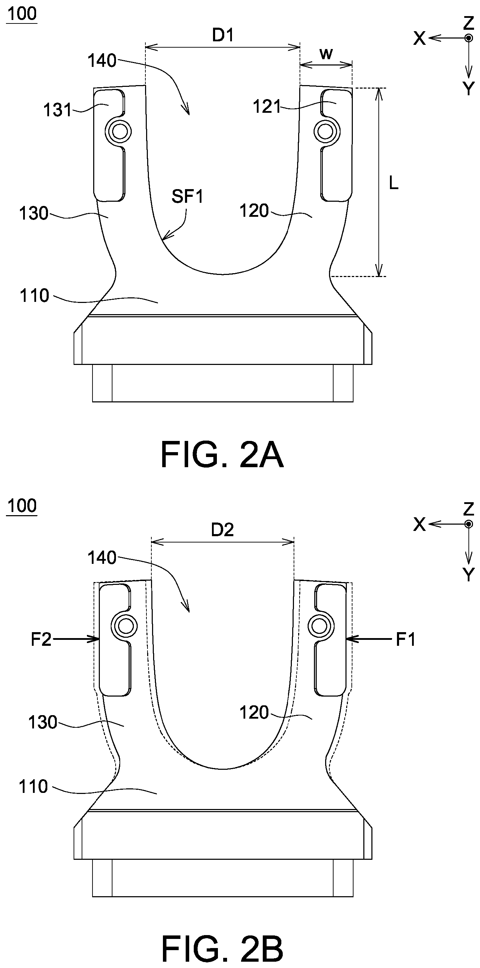

FIG. 1 illustrates a three-dimensional view of a deformable molding unit 100 according to one embodiment of the present invention. FIG. 2A illustrates a top view of the deformable molding unit 100 of FIG. 1.

Referring to FIG. 1 and FIG. 2A, the deformable molding unit 100 is used for injection molding and forms a part of the mold body for injection molding. In one embodiment, the deformable molding unit 100 may serve as a part of the mold core structure, which is the key component of the mold body that primarily sculpts the external shape of the product. The deformable molding unit 100 includes a bottom portion 110 and a first elastic portion 120. The first elastic portion 120 is connected to the bottom portion 110 and may elastically deform with respect to the bottom portion 110. That is, when the first elastic portion 120 is subjected to an external force, it deforms with respect to the bottom portion 110; when the external force is removed, the first elastic portion 120 returns to its original shape and position.

In one embodiment, the deformable molding unit 100 may further include a second elastic portion 130. The second elastic portion 130 is connected to the bottom portion 110 and may also elastically deform with respect to the bottom portion 110. The first elastic portion 120 and the second elastic portion 130 are arranged on the bottom portion 110 at spaced intervals along the X-axis, so that the deformable molding unit 100 generally forms a U-shaped structure.

The deformable molding unit 100 may include a deformable cavity 140, which is formed between the first elastic portion 120, the second elastic portion 130 and the bottom portion 110. The first elastic portion 120, the second elastic portion 130 and the bottom portion 110 are all in contact with the deformable cavity 140.

In one embodiment, the deformable molding unit 100 may have a textured structure, which may be formed on the surface SF1 where the first elastic portion 120, the second elastic portion 130 and the bottom portion 110 come into contact with the deformable cavity 140, providing the finished product with a textured appearance.

The deformable cavity 140 has an original dimension D1, which may represent the distance between the first elastic portion 120 and the second elastic portion 130 along the X-axis, or the opening size of the deformable cavity 140.

The first elastic portion 120 and the second elastic portion 130 of the deformable molding unit 100 may be adapted to be subjected to a compression force along the X-axis, allowing both to elastically deform with respect to the bottom portion 110. When the first elastic portion 120 and/or the second elastic portion 130 are subjected to a compression force along the X-axis, the size of the deformable cavity 140 may change. For example, referring to FIG. 2B, which is a schematic diagram illustrating a first compression force F1 and a second compression force F2 may be applied to the first elastic portion 120 and the second elastic portion 130 of the deformable molding unit 100 of FIG. 1. When the first elastic portion 120 and the second elastic portion 130 are subjected to the first compression force F1 and the second compression force F2 along the X-axis, the first elastic portion 120 and the second elastic portion 130 deform with respect to the bottom portion 110, thereby reducing the size of the deformable cavity 140 to a reduced dimension D2. Once the first compression force F1 and the second compression force F2 are released, the first elastic portion 120 and the second elastic portion 130 return to their original positions, restoring the deformable cavity 140 to its original dimension D1, as shown in FIG. 2A.

In one embodiment, the elastic deformability of the first elastic portion 120 and/or the second elastic portion 130 with respect to the bottom portion 110 may be applied to the injection molding method. This ensures that the injection-molded product does not have a sidewall with a noticeable draft angle and can also be demolded smoothly and without damage.

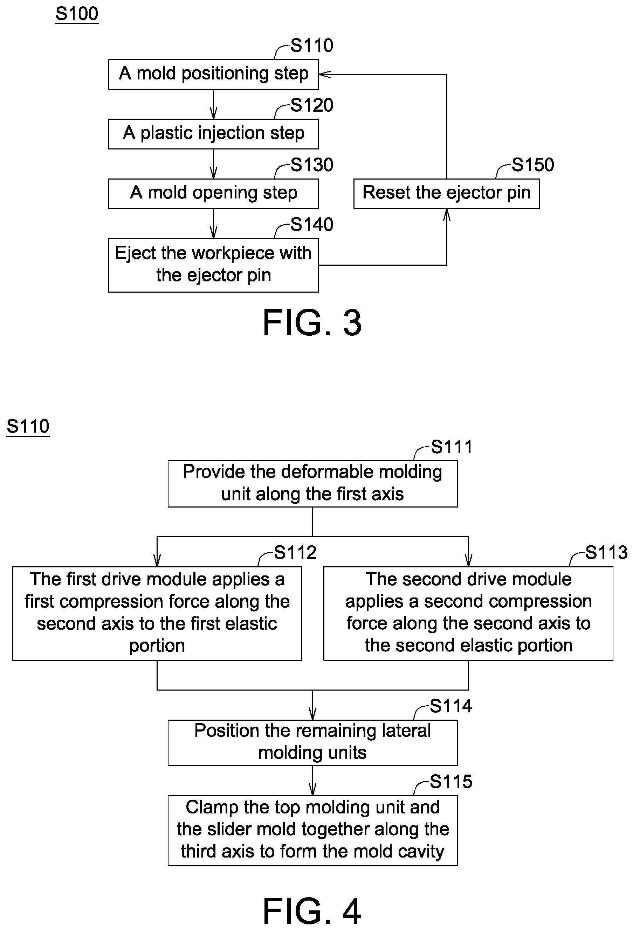

Referring to FIG. 3, a flowchart of an injection molding method S100 according to one embodiment of the present invention is shown. The injection molding method S100 may sequentially include the following steps: step S110, a mold positioning step; step S120, a plastic injection step; step S130, a mold opening step; step S140, ejecting the workpiece with the ejector pin; and step S150, resetting the ejector pin. Steps S110 to S150 form one cycle of injection molding a workpiece, and repeating this cycle allows the production of multiple workpieces.

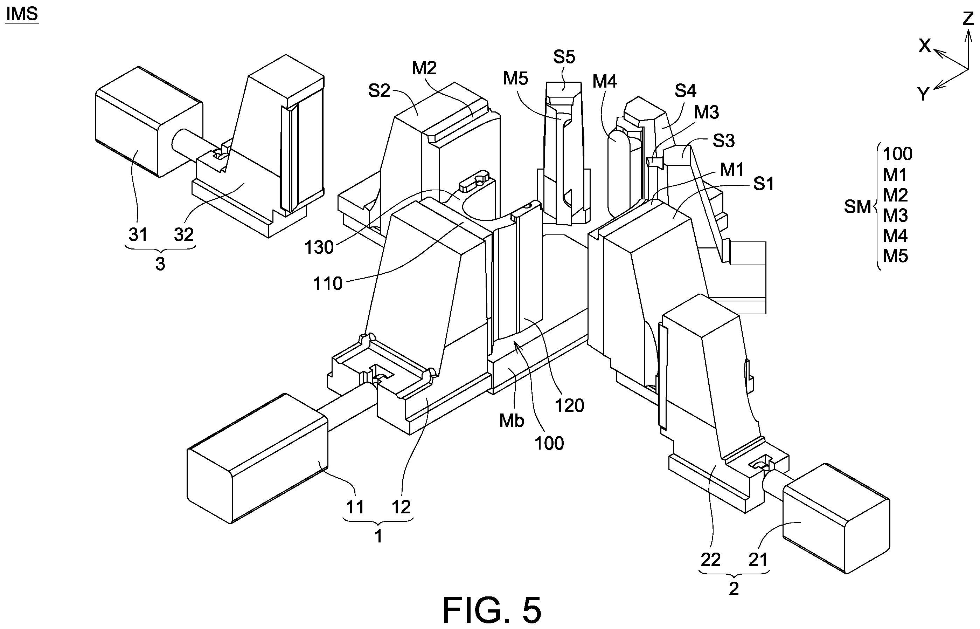

FIG. 4 is one embodiment of the mold positioning step S110. FIG. 5 to FIG. 8 illustrate schematic diagrams of an injection molding system IMS according to one embodiment of the present invention, assisting in illustrating the mold positioning step S110 shown in FIG. 4.

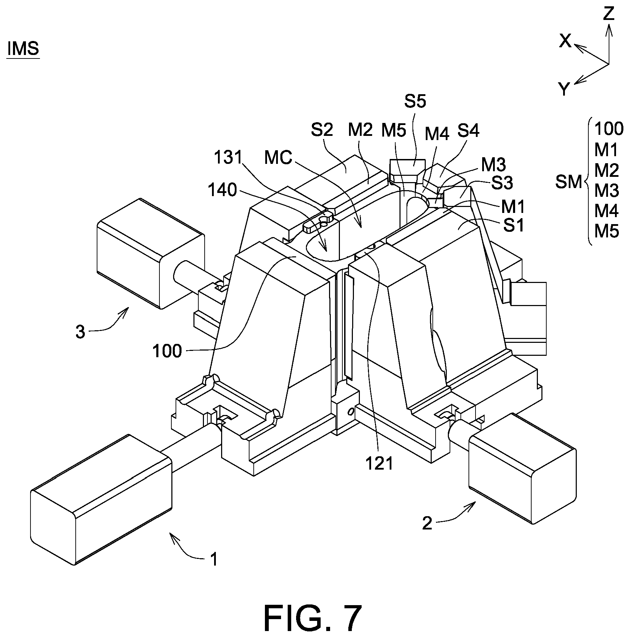

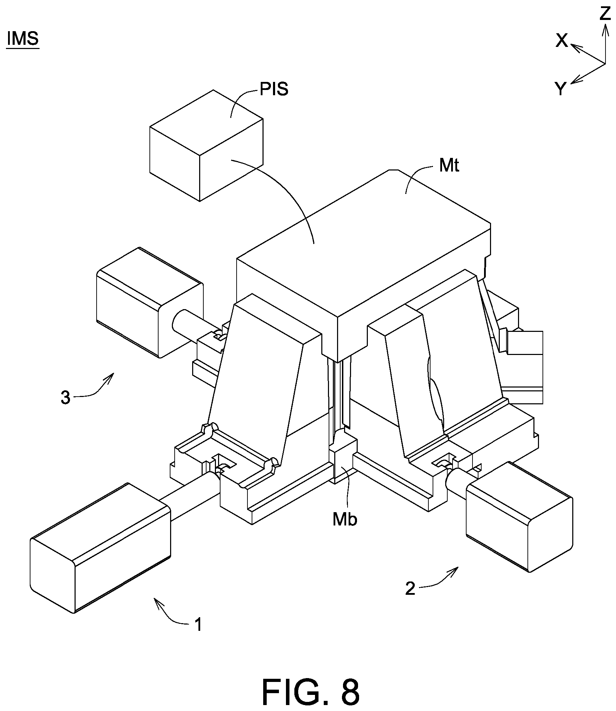

The mold positioning step S110 is used to define a mold cavity MC (as indicated in FIG. 7). Referring to FIG. 4 and FIG. 5, the Y-axis is defined as the first axis, the X-axis is defined as the second axis, and the Z-axis is defined as the third axis. The first and second axes are mutually perpendicular directions in the horizontal plane, while the third axis is perpendicular to this horizontal plane. The injection molding system IMS may include a bottom molding unit Mb and a top molding unit Mt (as indicated in FIG. 8), which move relative to each other in the vertical direction (Z-axis); a slider mold SM that moves along the horizontal direction (XY plane) on one side of the bottom molding unit Mb; a positioning drive module 1 that operates along the Y-axis; and a first drive module 2 and a second drive module 3 that operate along the X-axis. The slider mold SM may include a deformable molding unit 100, a first lateral molding unit M1, a second lateral molding unit M2, a third lateral molding unit M3, a fourth lateral molding unit M4 and a fifth lateral molding unit M5.

The positioning drive module 1 may include a power source 11 and a positioning slide base 12, which are used to drive the deformable molding unit 100 along the Y-axis. The deformable molding unit 100 is fixed to and moves in conjunction with the positioning slide base 12. For example, the bottom portion 110 of the deformable molding unit 100 may be secured to the positioning slide base 12. The positioning slide base 12 is driven by the power source 11 to move along the Y-axis.

The first drive module 2 may include a first power source 21 and a first push block 22, which are used to apply a first compression force to the first elastic portion 120 of the deformable molding unit 100 along the X-axis. The second drive module 3 may include a second power source 31 and a second push block 32, which are used to apply a second compression force to the second elastic portion 130 of the deformable molding unit 100 along the X-axis. The first push block 22 and the second push block 32 are driven by the first power source 21 and the second power source 31, respectively, to move along the X-axis.

In one embodiment, the power source 11, the first power source 21, and the second power source 31 may be hydraulic cylinders, but they are not intended to limit the present invention.

The injection molding system IMS may further include a first slide base S1, a second slide base S2, a third slide base S3, a fourth slide base S4 and a fifth slide base S5. The first lateral molding unit M1, the second lateral molding unit M2, the third lateral molding unit M3, the fourth lateral molding unit M4 and the fifth lateral molding unit M5 are respectively fixed to the first slide base S1, the second slide base S2, the third slide base S3, the fourth slide base S4 and the fifth slide base S5, and move in conjunction with the first slide base S1, the second slide base S2, the third slide base S3, the fourth slide base S4 and the fifth slide base S5, respectively. In one embodiment, the first slide base S1, the second slide base S2, the third slide base S3, the fourth slide base S4 and the fifth slide base S5 may be driven by angle pins (not shown).

First, a bottom molding unit Mb and a top molding unit Mt (not shown) are provided. In one embodiment, the bottom molding unit Mb and the top molding unit Mt may serve as a male mold and a female mold, respectively. Next, referring to FIG. 4 and FIG. 5, in step S111, a deformable molding unit 100 is provided along the first axis (Y-axis). The deformable molding unit 100 may be disposed on one side of the bottom molding unit Mb. The opening of the deformable cavity 140 of the deformable molding unit 100 is configured to face the negative direction of the Y-axis. The deformable molding unit 100 may be driven by the positioning drive module 1 to move in the negative direction of the Y-axis and be positioned on the bottom molding unit Mb.

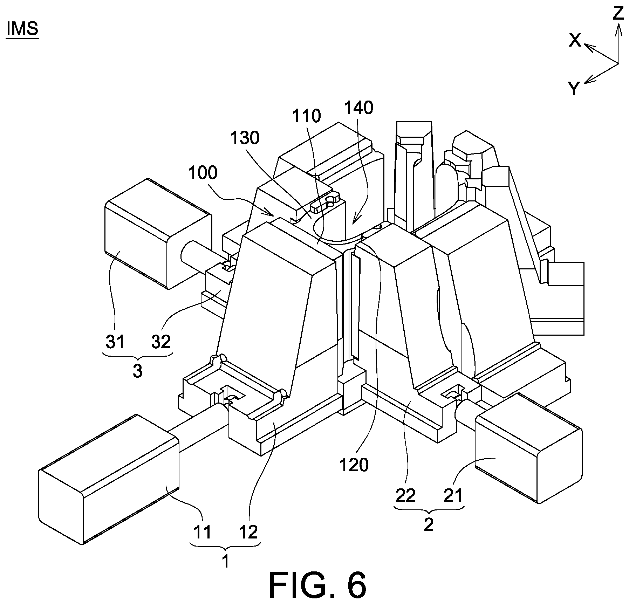

Then, referring to FIG. 4 and FIG. 6, in step S112 and step S113, the first drive module 2 applies a first compression force along the second axis (X-axis) to the first elastic portion 120 of the deformable molding unit 100, and the second drive module 3 applies a second compression force along the second axis (X-axis) to the second elastic portion 130 of the deformable molding unit 100. In one embodiment, the first compression force and the second compression force may correspond to each other and have opposite directions. The first compression force is applied in the positive direction of the X-axis, while the second compression force is applied in the negative direction of the X-axis. The first elastic portion 120 and the second elastic portion 130 are deformed with respect to the bottom portion 110 by the first and second compression forces, respectively, causing the size of the deformable cavity 140 to reduce to a reduced dimension D2 (as indicated in FIG. 2B).

Next, referring to FIG. 4 and FIG. 7, in step S114, the remaining lateral molding units are positioned. In one embodiment, the first slide base S1, the second slide base S2, the third slide base S3, the fourth slide base S4 and the fifth slide base S5 may be driven by angle pins (not shown), allowing the first lateral molding unit M1, the second lateral molding unit M2, the third lateral molding unit M3, the fourth lateral molding unit M4 and the fifth lateral molding unit M5 to move and be positioned on the bottom molding unit Mb.

Afterwards, referring to FIG. 4, FIG. 7 and FIG. 8, in step S115, the top molding unit Mt and the slider mold SM are clamped together along the third axis (Z-axis) to form the mold cavity MC. Thus, the mold positioning step S110 shown in FIG. 3 is completed.

Referring to FIG. 1, FIG. 7 and FIG. 8, in one embodiment, the first elastic portion 120 includes a first positioning structure 121 at a location where it is in contact with the top molding unit Mt (i.e., on one side of the positive direction of the Z-axis), and the second elastic portion 130 includes a second positioning structure 131 at a location where it is in contact with the top molding unit Mt (i.e., on one side of the positive direction of the Z-axis). The top molding unit Mt is structured to engage with the first positioning structure 121 and the second positioning structure 131, ensuring a secure positioning effect when the top molding unit Mt and the deformable molding unit 100 are clamped together, preventing uneven force distribution on the first elastic portion 120 and the second elastic portion 130.

After the mold positioning step S110 is completed, next, referring to FIG. 3, FIG. 7 and FIG. 8, the plastic injection step S120 is performed. The injection molding system IMS may also include a plastic injection source PIS. The plastic injection source PIS may inject molten plastic into the mold cavity MC via a nozzle to form the workpiece. The mold cavity MC includes a deformable cavity 140, and at this point, the size of the deformable cavity 140 is the reduced dimension D2 (indicated in FIG. 2B). Once the mold cavity MC is filled with molten plastic and the plastic is waiting to cool, the mold opening step S130 is performed.

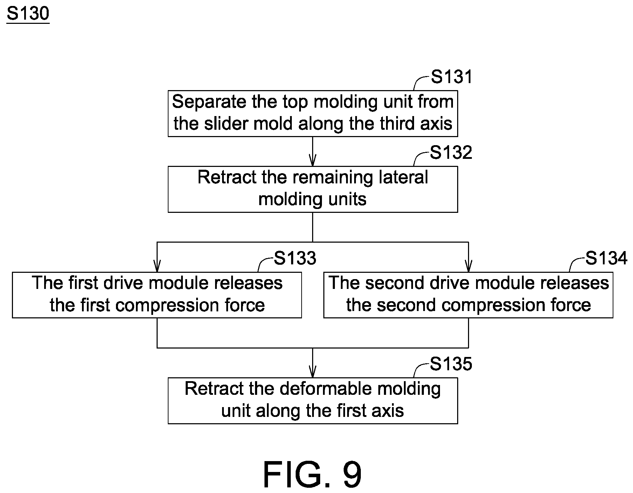

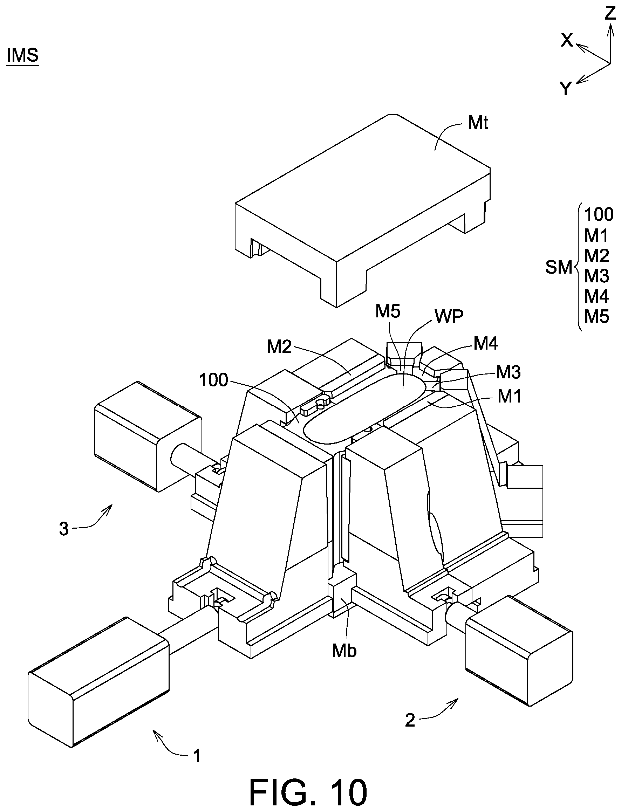

FIG. 9 is one embodiment of the mold opening step S130. FIG. 10 to FIG. 13 illustrate schematic diagrams of the injection molding system IMS according to one embodiment of the present invention, assisting in illustrating the mold opening step S130 shown in FIG. 9.

Referring to FIG. 9 and FIG. 10, in step S131, the top molding unit Mt is separated from the slider mold SM along the third axis (Z-axis). Here, the deformable molding unit 100, the first lateral molding unit M1, the second lateral molding unit M2, the third lateral molding unit M3, the fourth lateral molding unit M4 and the fifth lateral molding unit M5 are separated from the top molding unit Mt along the Z-axis, exposing the workpiece WP.

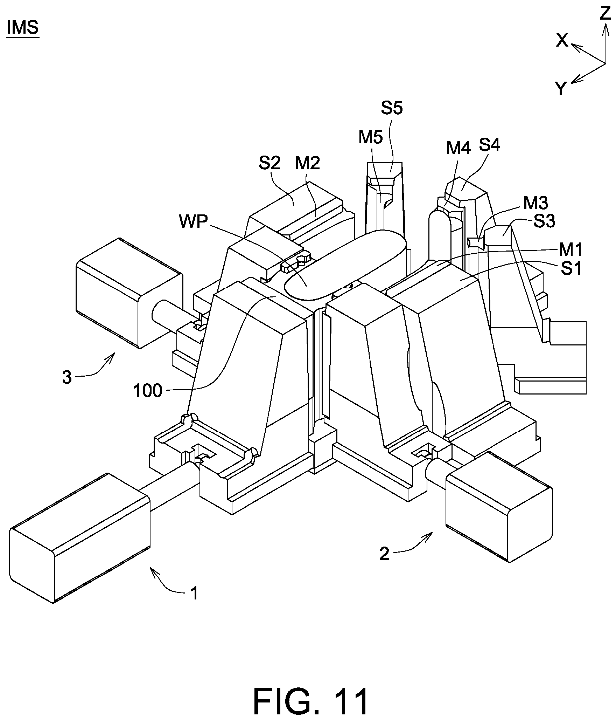

Next, referring to FIG. 9 and FIG. 11, in step S132, the remaining lateral molding units are retracted. In one embodiment, the angle pins (not shown) may drive the first slide base S1, the second slide base S2, the third slide base S3, the fourth slide base S4 and the fifth slide base S5 to move, causing the first lateral molding unit M1, the second lateral molding unit M2, the third lateral molding unit M3, the fourth lateral molding unit M4 and the fifth lateral molding unit M5 to move away from the workpiece WP.

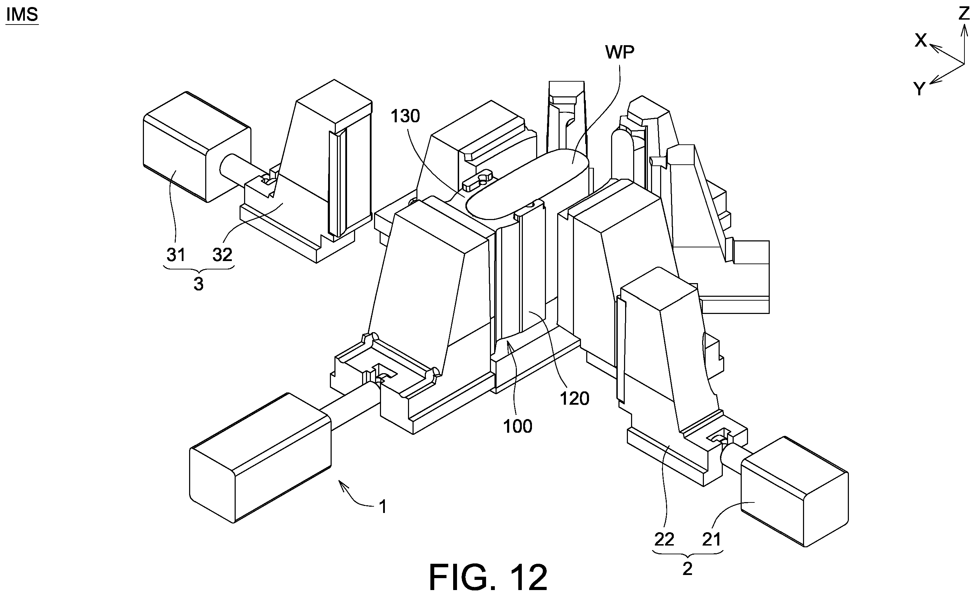

Then, referring to FIG. 9 and FIG. 12, in step S133 and step S134, the first drive module 2 releases the first compression force applied along the second axis (X-axis) to the first elastic portion 120 of the deformable molding unit 100, and the second drive module 3 releases the second compression force applied along the second axis (X-axis) to the second elastic portion 130 of the deformable molding unit 100. As the first compression force and the second compression force are released, the first elastic portion 120 and the second elastic portion 130 naturally expand outward with respect to the bottom portion 110 and return to their original positions, thereby restoring the size of the deformable cavity 140 to its original dimension D1 (as indicated in FIG. 2A).

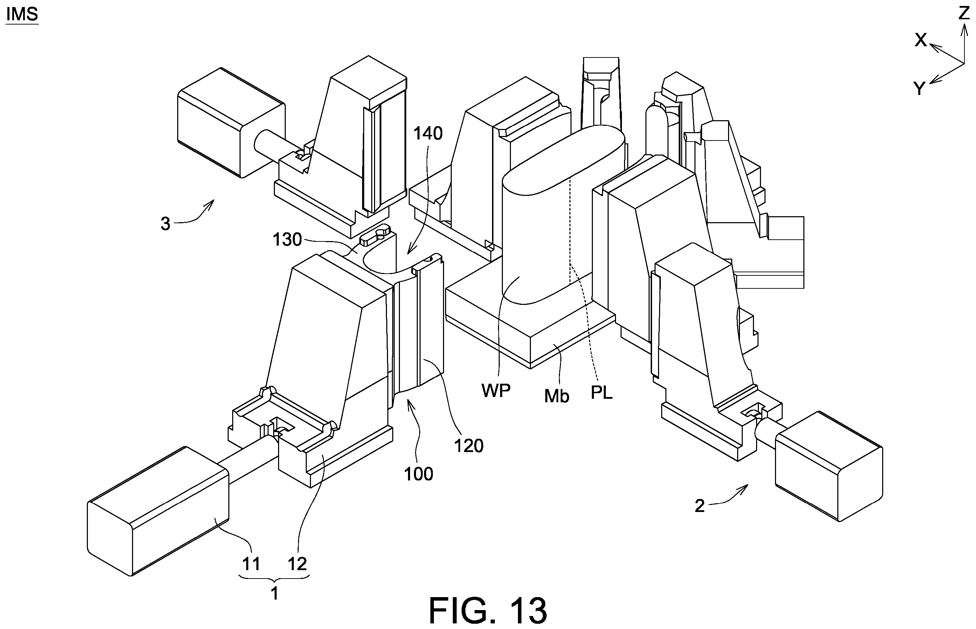

Afterward, referring to FIG. 9 and FIG. 13, in step S135, the deformable molding unit 100 is retracted along the first axis (Y-axis). Here, the deformable molding unit 100 may be driven by the positioning drive module 1 to move in the positive direction of the Y-axis and away from the workpiece WP.

After the slider mold SM separates from the workpiece WP, as shown in FIG. 3, step S140 is performed to eject the workpiece WP by ejector pins. Then, step S150 is performed to reset the ejector pins. The process then loops back to step S110, allowing the production of multiple workpieces WP.

Referring to FIG. 13, in the aforementioned embodiment, the deformable molding unit 100 is applied to the slider mold SM, which moves in the horizontal direction (XY plane). The deformable molding unit 100 may change the opening size of the deformable cavity 140 through the first elastic portion 120 and the second elastic portion 130. During the mold positioning process, compression force is applied to reduce the size of the deformable cavity 140, preventing the molded workpiece WP from having a sidewall with an excessively flared draft angle. Thus, the deformable molding unit 100 may be particularly suitable for areas of the workpiece WP with higher aesthetic requirements. For example, in the embodiment shown in FIG. 13, the workpiece WP is an elongated product with a curved outer shape. The surface of the workpiece WP facing the positive direction of the Y-axis is a critical area with high aesthetic demands. When viewed towards the negative direction of the Y-axis, it is undesirable to see a sidewall with an excessively flared draft angle or any parting line PL (i.e., the joint surface between slider molds). By using the deformable molding unit 100, the application of the deformable cavity with the reduced dimension produced by the compression force can prevent a sidewall with a noticeable draft angle on the workpiece WP after plastic is injected into the deformable cavity with the reduced dimension. In addition, the parting line PL can be further shifted back (toward the negative direction of the Y-axis). As a result, the parting line PL is not visibly present when viewed towards the negative direction of the Y-axis. Subsequently, during the demolding process, the release of the compression force allows the deformable cavity 140 to return to its original dimension, thereby expanding the draft angle. This ensures that the workpiece WP can be smoothly and undamaged demolded.

Referring to FIGS. 2A and 2B, the first elastic portion 120 and/or the second elastic portion 130 has a length L along the first axis (Y-axis) and a width w along the second axis (X-axis), with w/L≤0.50. In one embodiment, w/L may satisfy at least one of the following conditions: 0.20≤w/L, 0.23≤w/L, 0.26≤w/L, w/L≤0.46, w/L≤0.48, and w/L≤0.50. In one embodiment, the first compression force F1 and the second compression force F2 may be at least 1000 kilograms-force (kgf). Table 1 presents three design examples of the deformable molding unit 100 in terms of dimensional configuration, but these are not intended to limit the present invention.

**Table 1**

| Example | L (mm) | w (mm) | Compression force (kgf) | Deformation (mm) |
|---|---|---|---|---|
| Example 1 | 70 | 32 | 2000 | 0.07-0.1 |
| Example 2 | 70 | 25 | 2000 | about 0.15 |
| Example 3 | 75 | 20 | 2000 | about 0.25 |

As shown in Table 1, the dimensions of L and w for the first elastic portion 120 and/or the second elastic portion 130 may be designed based on actual application requirements, such as the necessary draft angle and the required draft depth. However, we must still maintain a certain width to allow heating and cooling water channels to flow within it.

In one embodiment, the material of the deformable molding unit 100 may be steel, such as high-manganese steel or spring steel with better elasticity. However, this is not intended to limit the present invention.

It should be understood that although the above embodiment describes both the first elastic portion 120 and the second elastic portion 130 may undergo elastic deformation with respect to the bottom portion 110, the present invention is not limited thereto. In practice, the configuration of the elastic portions may be adjusted according to actual requirements. In one embodiment, only one of the elastic portions (e.g., the first elastic portion 120 or the second elastic portion 130) may undergo elastic deformation with respect to the bottom portion 110, thereby enabling the deformable cavity 140 to change in size. For example, if the aesthetic requirement of the workpiece WP applies only to the side connected to the first elastic portion 120, then the deformable section may be provided solely in the first elastic portion 120.

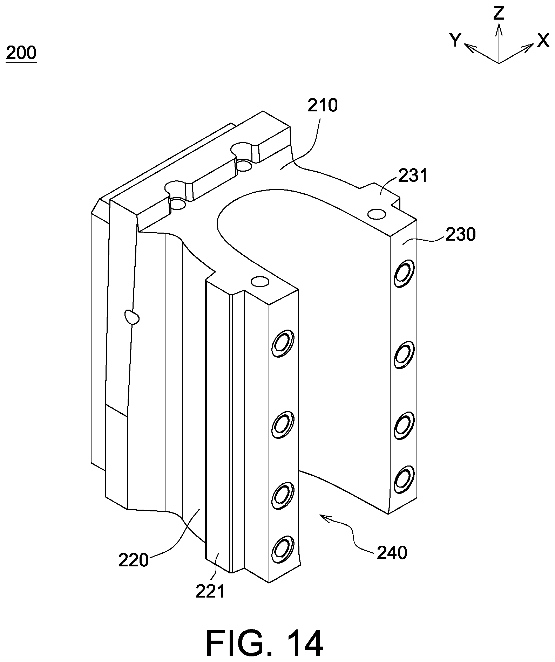

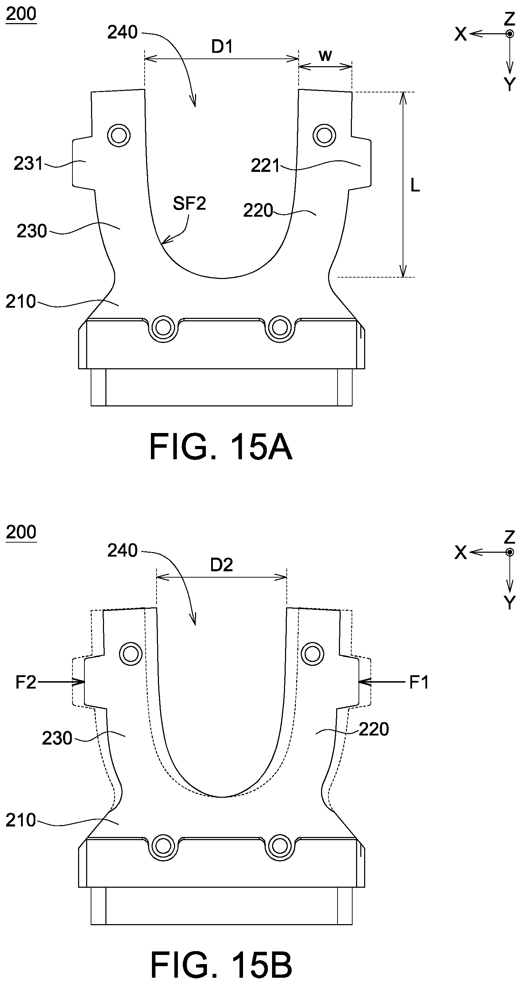

FIG. 14 illustrates a three-dimensional view of a deformable molding unit 200 according to another embodiment of the present invention. FIG. 15A illustrates a top view of the deformable molding unit 200 of FIG. 14. FIG. 15B is a schematic diagram illustrating a first compression force F1 and a second compression force F2 may be applied to the first elastic portion 220 and the second elastic portion 230 of the deformable molding unit 200 of FIG. 14.

Referring to FIG. 14, FIG. 15A and FIG. 15B, the deformable molding unit 200 is generally similar to the deformable molding unit 100 shown in FIG. 1, FIG. 2A and FIG. 2B. The deformable molding unit 200 includes a bottom portion 210, and a first elastic portion 220 and a second elastic portion 230 connected to the bottom portion 210. The first elastic portion 220 and the second elastic portion 230 may be adapted to be subjected to the first compression force F1 and the second compression force F2 along the X-axis, enabling the first elastic portion 220 and the second elastic portion 230 to elastically deform with respect to the bottom portion 210, thereby reducing the size of the deformable cavity 240 from the original dimension D1 to the reduced dimension D2. When the first compression force F1 and the second compression force F2 are released, the size of the deformable cavity 240 may return to the original dimension D1. In one embodiment, the surface SF2 of the first elastic portion 220, the second elastic portion 230 and the bottom portion 210 that contacts the deformable cavity 240 may also feature a textured structure, providing the finished product a textured appearance.

The deformable molding unit 200 may also be applied to the injection molding method shown in FIG. 3 and the injection molding system IMS shown in FIGS. 5-8 and FIGS.10-13. The difference from the deformable molding unit 100 in FIG. 1, FIG. 2A and FIG. 2B is that the first elastic portion 220 of the deformable molding unit 200 has a first positioning structure 221 at a location where it is in contact with the first drive module 2 (i.e., the side that is subjected to the first compression force F1), and the second elastic portion 230 has a second positioning structure 231 at a location where it is in contact with the second drive module 3 (i.e., the side that is subjected to the second compression force F2). The first push block 22 of the first drive module 2 and the second push block 32 of the second drive module 3 may have a structure that engages with the first positioning structure 221 and the second positioning structure 231 to securely position the deformable molding unit 200, thereby preventing uneven force distribution on the first elastic portion 220 and the second elastic portion 230.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An injection molding method (S100), wherein the injection molding method comprises:
performing a mold positioning step (S110) to define a mold cavity (MC), the mold positioning step comprising:
providing a deformable molding unit (100, 200) on a first axis (Y-axis), the deformable molding unit having a deformable cavity (140, 240) and comprising a bottom portion (110, 210) and a first elastic portion (120, 220) connected to the bottom portion, the bottom portion and the first elastic portion being connected to the deformable cavity, the first elastic portion being elastically deformable with respect to the bottom portion, and the deformable cavity having an original dimension (D1); and
applying, by a first drive module (2), a first compression force (F1) to the first elastic portion along a second axis (X-axis) perpendicular to the first axis, such that the first elastic portion deforms with respect to the bottom portion and the deformable cavity is reduced to a reduced dimension (D2);
injecting plastic into the mold cavity comprising the deformable cavity with the reduced dimension to form a workpiece (WP);
releasing, by the first drive module, the first compression force, such that the first elastic portion is returned and the deformable cavity is restored to the original dimension; and
retracting the deformable molding unit along the first axis.

2. The injection molding method according to claim 1, wherein the first elastic portion comprises a first positioning structure (221) at a location where it is in contact with the first drive module.

3. The injection molding method according to claim 1, wherein the mold positioning step further comprises:
clamping a top molding unit (Mt), the deformable molding unit and a bottom molding unit (Mb) together on a third axis (Z-axis) to form the mold cavity, wherein the first axis, the second axis and the third axis are mutually perpendicular.

4. The injection molding method according to claim 3, wherein the first elastic portion comprises a first positioning structure (121) at a location where it is in contact with the top molding unit.

5. The injection molding method according to claim 3 or 4, wherein the injection molding method further comprises:
separating the top molding unit from the deformable molding unit along the third axis to expose the workpiece.

6. The injection molding method according to claim 5, wherein the step (S133) of releasing the first compression force by the first driving module is performed after the step (S131) of separating the top molding unit from the deformable molding unit along the third axis.

7. The injection molding method according to anyone of the claim 1 to 6, wherein the first compression force is at least 1000 kgf.

8. A deformable molding unit (100, 200) for injection molding, wherein the deformable molding unit comprises:
a bottom portion (110, 210); and
a first elastic portion (120, 220) connected to the bottom portion, the first elastic portion being elastically deformable with respect to the bottom portion;
wherein the deformable molding unit has a deformable cavity (140,240), the bottom portion and the first elastic portion are connected to the deformable cavity, the deformable molding unit is adapted to be positioned along a first axis (Y-axis) during injection molding, and the first elastic portion is adapted to be subjected to a first compression force (F1) along a second axis (X-axis) perpendicular to the first axis during injection molding, such that the first elastic portion deforms with respect to the bottom portion, thereby reducing the deformable cavity in size.

9. The deformable molding unit according to claim 8, wherein the first elastic portion comprises a first positioning structure (221) on a side subjected to the first compression force.

10. The deformable molding unit according to claim 8, wherein the first elastic portion comprises a first positioning structure (121) on a third axis (Z-axis), and the first axis, the second axis, and the third axis are mutually perpendicular.

11. The deformable molding unit according to anyone of the claims 8 to 10, wherein the deformable molding unit further comprises a second elastic portion (130, 230) connected to the bottom portion, and the first elastic portion and the second elastic portion are arranged on the bottom portion at spaced intervals along the second axis.

12. The deformable molding unit according to claim 11, wherein the deformable cavity is formed between the first elastic portion, the second elastic portion and the bottom portion, and the first elastic portion, the second elastic portion and the bottom portion are in contact with the deformable cavity.

13. The deformable molding unit according to claim 12, wherein each of the first elastic portion, the second elastic portion and the bottom portion has a textured structure on a surface (SF1, SF2) in contact with the deformable cavity.

14. The deformable molding unit according to claim 12 or 13, wherein the second elastic portion is adapted to be subjected to a second compression force (F2) along the second axis during injection molding, such that the second elastic portion deforms with respect to the bottom portion, thereby reducing the deformable cavity in size, the second compression force corresponding to and being opposite in direction to the first compression force.

15. The deformable molding unit according to anyone of the claims 8 to 14, wherein a length of the first elastic portion along the first axis is **L,** a width of the first elastic portion along the second axis is w, and 0.20≤w/L≤0.50.
